# EUROPEAN PATENT APPLICATION

(11) **EP 2 799 149 A1**
(43) Date of publication of application: **05.11.2014**
(21) Application number: 12860939.3
(22) Date of filing: 13.12.2012
(51) Int. Cl.: B05B 1/26, B05B 7/08

(54) **LIQUID ATOMIZATION DEVICE**

(30) Priority: 19.12.2011 JP 2011277336
(71) Applicant: Nozzle Network Co., Ltd, Tamba-shi, Hyogo 669-3309 (JP)
(72) Inventor: ASAKAWA,Hiroyoshi, Tamba-shi Hyogo 669-3309 (JP); KUGE,Ryota, Tamba-shi Hyogo 669-3309 (JP)
(74) Representative: Hannke, Christian
(86) International application number: PCT/JP2012/082420
(87) International publication number: WO 2013/094522

(57) **Abstract**

A liquid atomization device includes a nozzle body. The nozzle body includes: a first gas spray portion and a second gas spray portion for spraying two gas flows; a liquid passage having a passage through which liquid flows by formation of the two gas flows sprayed by the first gas spray portion and the second gas spray portion; a gas-liquid mixture area where the gas flow sprayed from the first gas spray portion and the gas flow sprayed from the second gas spray portion are made to collide against liquid which flows from the liquid passage to atomize the liquid; and a spray outlet for spraying mist atomized in the gas-liquid mixture area to outside.

## Description

### TECHNICAL FIELD

The present invention relates to a liquid atomizing device and a liquid atomizing method for atomizing liquid.

### BACKGROUND ART

As conventional atomizing technique, there are a gas-liquid mix type (two-fluid type) technique, an ultrasound type technique, an extra-high voltage type (100MPa to 300MPa) technique, and a steaming type technique. According to a general two-fluid nozzle, gas and liquid are injected in the same injection direction, and liquid is miniaturized by a shear effect generated by accompanying flow of gas and liquid. Meanwhile, in fields of evaporation coating on a semiconductor wafer, medical equipment (e.g., suction machine), a liquid spray for cosmetic purposes, moisturizing liquid spray, and the like, it is required to atomize liquid with low energy.

As one example of a gas-liquid mix type two-fluid nozzle, an atomizing nozzle device for producing minute particle mist is known (patent document 1). This atomizing nozzle device includes a first nozzle portion and a second nozzle portion, atomized liquid from the first nozzle portion and atomized liquid from the second nozzle portion are made to collide with each other, and minute particle mist can be formed. However, since the atomizing nozzle device includes two two-fluid nozzle portions, the atomizing nozzle device becomes expensive and this is not suitable for miniaturization.

### PRIOR ART DOCUMENT

### PATENT DOCUMENT

Patent Document 1: JP-A-2002-126587

### SUMMARY OF THE INVENTION

### PROBLEMS TO BE SOLVED BY THE INVENTION

It is an object of the present invention to provide a liquid atomization device capable of atomizing liquid with low gas energy without substantially applying pressure to the liquid using a new principle which is different from the micronizing principle of the above-described conventional technique.

### MEANS FOR SOLVING THE PROBLEM

A liquid atomizing device of the present invention includes a nozzle body including:
a first gas spray portion and a second gas spray portion for spraying two gas flows;
a liquid passage having a passage through which liquid flows by formation of the two gas flows sprayed by the first gas spray portion and the second gas spray portion;
a gas-liquid mixture area where the gas flow sprayed from the first gas spray portion and the gas flow sprayed from the second gas spray portion are made to collide against liquid which flows from the liquid passage to atomize the liquid; and
a spray outlet for spraying mist atomized in the gas-liquid mixture area to outside.

According to this configuration, it is possible to suck liquid and to atomize the liquid only with low gas energy source (e.g., air pump) without requiring an energy source (e.g., liquid pump) for atomizing liquid. That is, if gas is sent to the nozzle body, it is possible to suck liquid by a siphon effect and to form mist of low speed spray. If gas pressure (flow rate of gas) is increased more, a suction force of liquid becomes higher, a mist amount (spray amount of generated mist) increases, and micronizing performance can be enhanced.

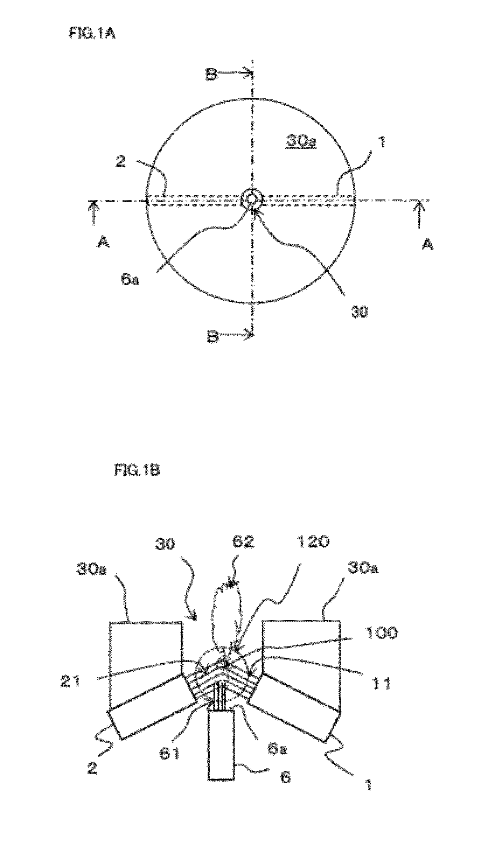

First, a principle of the present invention will be described with reference to Figs. 1A to 1C. Fig. 1A is a front view of a spray outlet of a nozzle body. First and second gas spray portions 1 and 2 extend from opposed left and right sides toward a center gas-liquid mixture area 120. The gas-liquid mixture area 120 is provided in a spray outlet 30 to form a recess. In the present invention, gas and liquid are internally mixed with each other in the recessed-shaped gas-liquid mixture area 120. After gas flows (11, 21) collide against each other in the gas-liquid mixture area 120, gas flows outside of an open space from a tip end of the spray outlet 30. By this gas flow, the gas-liquid mixture area 120 is brought into a negative pressure state, and liquid 61 is sucked from a liquid source (e.g., liquid accommodating portion) through a liquid passage 6 (liquid orifice). A reference sign 6a represents an outlet tip end of the liquid passage 6. A reference sign 30a represents an outer surface of the spray outlet 30.

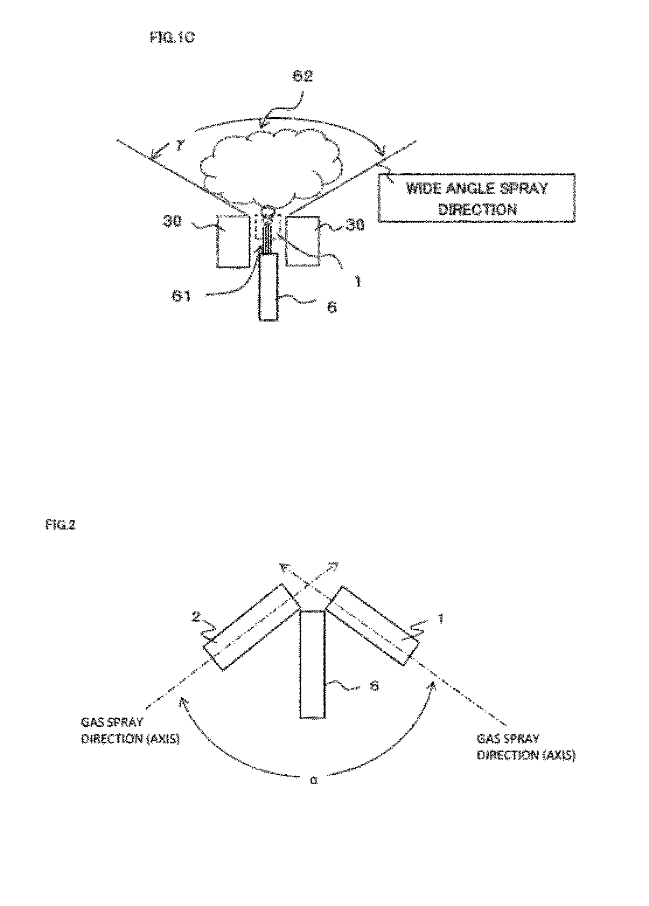

Fig. 1B is an enlarged sectional view taken along line A-A in Fig. 1A. Fig. 1C is an enlarged sectional view taken along line B-B in Fig. 1A. The sprayed gas flows 11 and 21 collide against each other, and a collision portion 100 is formed. A portion including the collision portion 100 is called a collision wall. The liquid 61 is sucked toward the collision wall (collision portion 100) through the liquid passage 6. The liquid 61 collides against the collision wall, the liquid 61 is pulverized (atomized) and becomes mist 62. An area where the mist 62 is generated is shown by a broken line as the gas-liquid mixture area 120. The mist 62 widely spreads (spreads in fan-like shape) from a tip end of the spray outlet 30 and is sprayed. As a spray pattern of mist, the mist is formed into a wide fan-like shape, for example, and a cross-sectional shape thereof is of an elliptic shape or a long circular shape. Collided (after collision) gas flows diffuse in parallel to a collision surface at which gas flows collide against each other (in direction in which collision surface expands), and the mist 62 spreads in the fan-like shape in the gas diffusion direction and is sprayed. With a siphon force generated by a conventional two-liquid nozzle, a spray angle is 20° to 30°, but with a siphon force of the present invention, it is possible to widely spray such that an angle γ of a spray pattern in a long-diameter direction is 70° to 90°. Not only the wide spray pattern of 70° to 90°, but it is also possible to realize a spray angle γ of 70° or less, and a spray angle of 20° to 40° can also be realized.

Pressure Pa (MPa) of gas flow is in a range from 0.005 to 0.80, for example. A range of gas pressure Pa (MPa) of low energy is preferably 0.01 to 0.15, and more preferably 0.03 to 0.1. According to the present invention, it is possible to atomize liquid only with such low gas energy. The present invention can be used also when pressure of gas flow is for example in a range from 0.1 to 0.8 (MPa), preferably 0.15 to 0.7, more preferably 0.2 to 0.6, and even more preferably 0.25 to 0.5.

It is preferable that pressures of two gas flows are set equal to each other or substantially equal to each other, and it is preferable that flow rates of two gas flows are also set equal to each other or substantially equal to each other. A cross-sectional shape of gas flow sprayed from a gas spray portion is not especially limited, and examples of the cross-sectional shape include a circular shape, an elliptic shape, a rectangular shape, and a polygonal shape. The cross-sectional shape of the gas flow depends on a cross section of an orifice of the gas spray portion.

A cross-sectional shape of a liquid passage is not especially limited.

A spray direction of mist 62 is limited by the spray outlet 30 which surrounds the mist 62. The spray outlet 30 may integrally be formed together with members (gas spray portions 1 and 2) for forming a gas orifice, or may independently be formed.

As one embodiment of the invention, an intersection angle between a spray direction axis of the first gas spray portion and a spray direction axis of the second gas spray portion is in a range from 90° to 180°. An angle range of intersection between spray direction axes of the first gas spray portion 1 and the second gas spray portion 2 corresponds to a collision angle formed between gas sprayed from the first gas spray portion 1 and gas sprayed from the second gas spray portion 2. Fig. 2 shows a collision angle α. For example, the "collision angle α" is in a range from 90° to 220°, preferably 90° to 180°, and more preferably 90° to 120°.

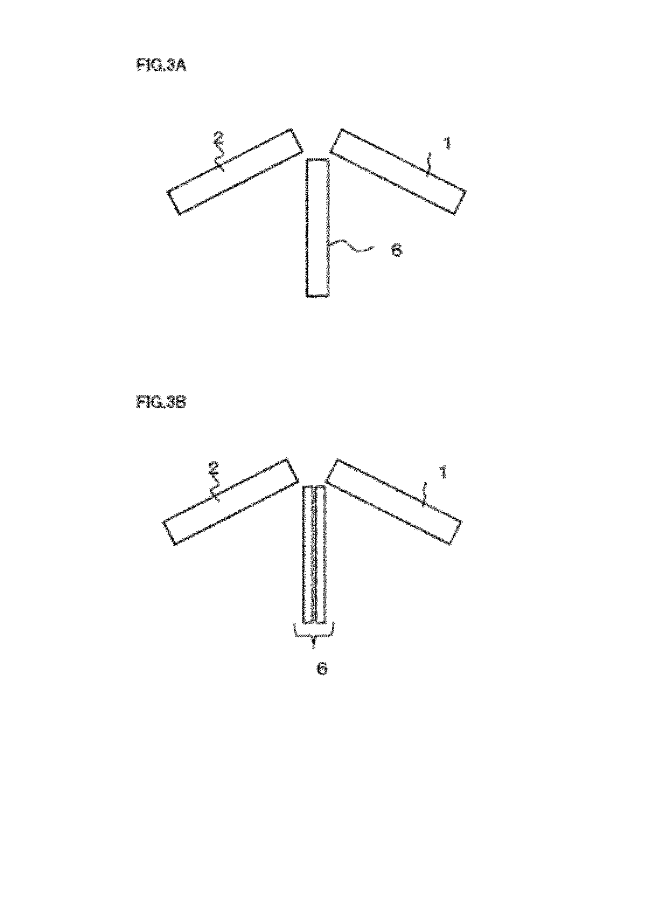

As one embodiment of the invention, the liquid atomization device further includes at least one more passage possessed by the liquid passage. According to this configuration, it is possible to suck liquid from two passages by a siphon effect, and since a suction amount of liquid can be doubled, a spray amount can be enhanced. If three passages are provided, the suction amount can be tripled. On the other hand, if three or four passages are formed, a size of the nozzle body increases. If two or more passages are provided, a spray cross section of a spray pattern can be made circular having a spray angle of 20° to 30°. Fig. 3A shows an example having one passage, and Fig. 3B shows an example having two passages.

As one embodiment of the invention, the liquid atomization device further includes a cover body for micronizing mist sprayed from the spray outlet while guiding the mist along a spray axial direction of the spray outlet,
the cover body including:
a suction portion through which air can flow between inside and outside of the cover body;
a mist passage for guiding the mist upward;
an outlet for guiding, to outside, mist which passes through the mist passage; and
a liquid accommodating portion for accommodating the liquid therein,
wherein the liquid accommodating portion is in communication with the liquid passage, and the liquid flows into the liquid passage.

According to this configuration, mist sprayed form the spray outlet of the nozzle body can further be micronized by the cover body, and the mist can be sprayed to outside of the device at low speed. Since it is possible to spray mist at low speed, it is possible to reduce cases where mist adheres to a wall surface of an interior of a cover portion and the mist becomes water drops. Since it is possible to configure such that liquid in the liquid accommodating portion flows into the liquid passage of the nozzle body, liquid can be set in the cover body. When mist is liquefied in the cover body, since liquid flows into the liquid accommodating portion through a wall surface of the interior of the cover body, it is also easy to reuse the liquid. Further, in order to reduce an adhesion amount of mist to wall surface in the cover body, it is preferable that the spray angle γ of mist is set to 20° to 40°.

As one embodiment of the present invention, it is possible to employ a structure in which liquid flows from an exterior liquid tank into the liquid passage through a pipe or the like.

As one embodiment of the invention, the liquid atomization device further comprising a baffle portion provided in the cover body for guiding the mist along a spray axial direction of the spray outlet. Mist is guided into the baffle, and micronizing performance is enhanced.

As one embodiment of the invention, the baffle portion includes a long-circular, elliptic or rectangular guide port, a hollow internal space, and an opening outlet in which at least two openings are formed. Mist having elliptic or long-circular spray cross section (γ = 20° to 40°) enters the guide port of the baffle having a cross-sectional shape suitable for the spray cross-sectional shape and then, the mist goes out from the opening outlet having the two openings through an interior space. The mist is further micronized by this baffle.

As one embodiment of the invention, the cover body includes:
a base portion connected to the nozzle body and having the liquid accommodating portion;
a first cover portion connected to the base portion;
a second cover portion connected to the first cover portion;
a suction cylinder connected to the second cover portion and having the suction portion; and
a third cover portion connected to the suction cylinder, and formed with the outlet.

According to this, it is possible to configure a small-sized cover body with a small number of simple parts which can be produced on a large scale. In this embodiment, the base portion, the first cover portion and the second cover portion may be configured using a single member, or they may be formed as independent members and they may be connected to each other. The first cover portion and the second cover portion may be configured using a single member, or they may be formed as independent members and they may be connected to each other. The second cover portion and the third cover portion may be configured using a single member, or they may be formed as independent members and they may be connected to each other. The base portion, the first cover portion, the second cover portion and the third cover portion may be configured using a single member, or they may be formed as independent members and they may be connected to each other.

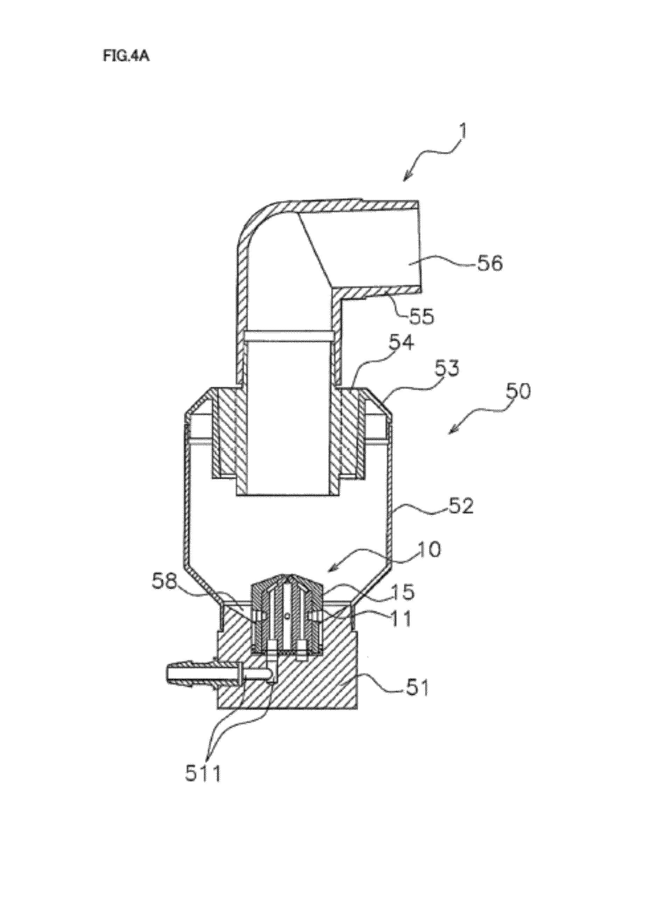

As one embodiment of the invention, the outlet inclines with respect to a spray axial direction of the spray outlet at a predetermined angle. The "predetermined angle" is 30° to 150°, for example. For example, Fig. 4A shows a case where the predetermined angle is 90°. The angle of the outlet can be set in accordance with intended use.

As one embodiment of the invention, a gas passage through which the gas flows flow is formed in the base portion. The gas passage is connected to a gas pressure source (e.g., air pump).

The gas is not especially limited, and examples of the gas include air, clean air, nitrogen, inert gas, fuel mixture air, and oxygen. The gas can appropriately be set in accordance with intended use.

The liquid is not especially limited, but liquid having low viscosity is preferable. Examples of the liquid include water, ionized water, moisturizing liquid, beauty water, cosmetic liquid such as cosmetic water, medical liquid, sterilized liquid, medical liquid such as sterilization liquid, paint, fuel oil, coating agent, solvent, and resin.

### BRIEF DESCRIPTION OF THE DRAWINGS

Fig. 1 A is a front view of a spray outlet of a nozzle body.
Fig. 1B is an enlarged sectional view taken along line A-A in Fig. 1A.
Fig. 1C is an enlarged sectional view taken along line B-B in Fig. 1A.
Fig. 2 is a schematic diagram for describing an intersection angle formed between two gas spray axes.
Fig. 3A is a schematic diagram showing an example having one liquid passage.
Fig. 3B is a schematic diagram showing an example having two liquid passages.
Fig. 4A is a schematic sectional view of an entire liquid atomization device of embodiment 1.
Fig. 4B is a schematic diagram showing an outward appearance of the liquid atomization device of the embodiment 1 as viewed from above.
Fig. 4C is a schematic sectional view of a nozzle body.
Fig. 5A is a diagram for describing a gas-liquid orifice portion of the nozzle body.
Fig. 5B is a diagram for describing a cap portion of the nozzle body.
Fig. 6 is a schematic sectional view of an entire liquid atomization device of embodiment 2.
Fig. 7A is a front view of a baffle (upper half is sectional view).
Fig. 7B is a side view of the baffle (upper half is sectional view).
Fig. 7C is a bottom view of the baffle.
Fig. 7D is a plan view of the baffle.
Fig. 8A is a schematic diagram (partially sectional view) of an entire liquid atomization device of embodiment 3.
Fig. 8B is a front view of Fig. 8A.
Fig. 8C is an enlarge view of a portion A in Fig. 8A.
Fig. 8D is a sectional view taken along line B-B in Fig. 8C.
Fig. 9A is a side sectional view of a gas-liquid orifice portion.
Fig. 9B is a sectional view taken along line Y-Y in Fig. 9A.
Fig. 9C is a front view of a spray outlet in Fig. 9A.
Fig. 10A is a schematic view (partially sectional view) of an entire liquid atomization device of embodiment 4.
Fig. 10B is a front view of Fig. 10A.
Fig. 10C is an enlarge view of a portion A in Fig. 10A.
Fig. 10D is a sectional view taken along line B-B in Fig. 10C.
Fig. 11A is a side view of a gas-liquid orifice portion (upper half is sectional view).
Fig. 11B is a sectional view taken along line X-X in Fig. 11A.
Fig. 11C is a front view of a spray outlet in Fig. 11A.

### MODE FOR CARRYING OUT THE INVENTION

### EMBODIMENT 1

A liquid atomization device 1 having a nozzle body and a cover body of this embodiment will be described with reference to the drawings. Fig. 4A is a schematic sectional view of the entire liquid atomization device 1. The liquid atomization device 1 includes a nozzle body 10 which primarily atomizes, and a cover body 50 which secondarily atomizes for further micronizing mist sprayed from the nozzle body 10.

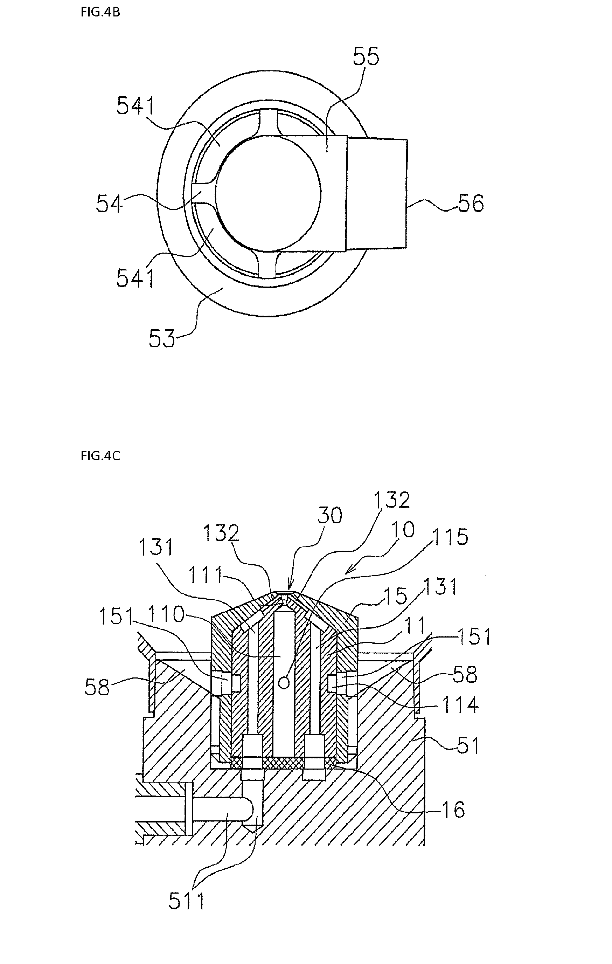

Fig. 4C is a schematic sectional view of the nozzle body 10. The nozzle body 10 includes a gas-liquid orifice portion 11 and a cap portion 15. A liquid passage 110 is formed at a center in an axial direction of the gas-liquid orifice portion 11. The liquid passage 110 includes a liquid orifice 111 in a direction of an outlet of the nozzle body. A depression (recess) 111 a having a diameter greater than that of the liquid orifice 111 is formed in an outlet of the liquid orifice 111. As another embodiment, the depression 111 a may not be provided, but if the depression 111 a is provided, there is a tendency that a siphon force becomes stronger. The liquid passage 110 is in communication with a later-described liquid accommodating portion 58.

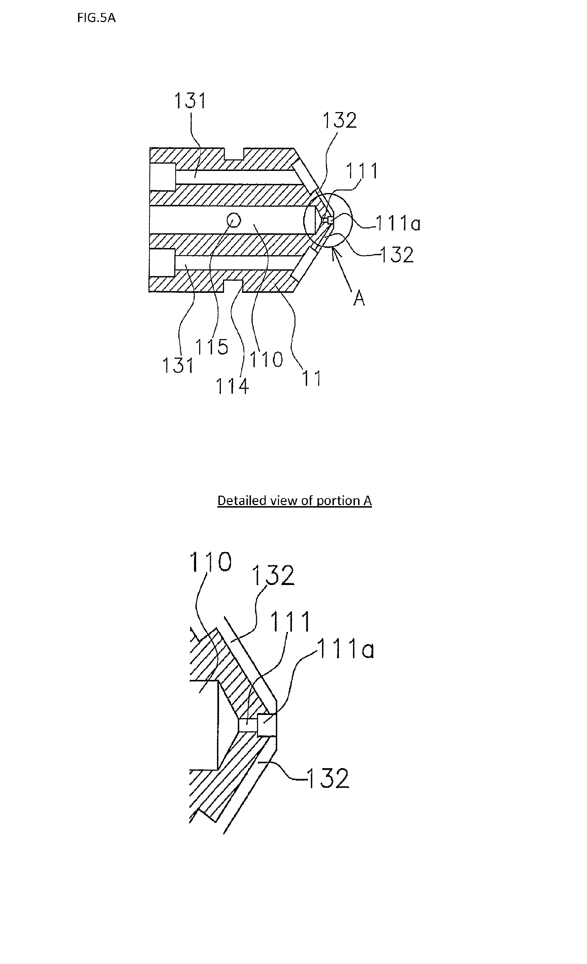

Fig. 5A is a sectional view of the gas-liquid orifice portion 11. Two gas passages 131 are formed in the gas-liquid orifice portion 11 in the axial direction and the gas passages 131 are in communication with grooves 132 formed in an outer wall surface, respectively. The two gas passages 131 and the grooves 132 correspond to first and second gas spray portions. The grooves 132 are covered with an inner wall surface of the cap portion 15, thereby forming a gas orifice. The first and second gas spray portions 131 are connected to an external air pump (not shown) through a gas passage 511 formed in a later-described base portion 51. A spray outlet 30 is formed in a tip end of the nozzle body. By flowing gas flow from the two grooves 132, liquid is sucked through the liquid orifice 111, the sucked liquid collides against gas flow, the liquid is atomized and mist is sprayed (sprayed at low speed) from the spray outlet 30. An area where liquid is atomized is a gas-liquid mixture area, and the area includes an internal space (space surrounded by inner wall 33) having a cross section which spreads toward its end and toward the outlet of the spray outlet 30, and a outlet front portion of the depression 111a. In this embodiment, gas and liquid are internally mixed in the gas-liquid mixture area, thereby atomizing liquid. In the embodiment 1, an intersection angle formed between gas flows caused by the two grooves 132 is 110°. A cross section of each of the grooves 132 has a V-shape (triangular shape).

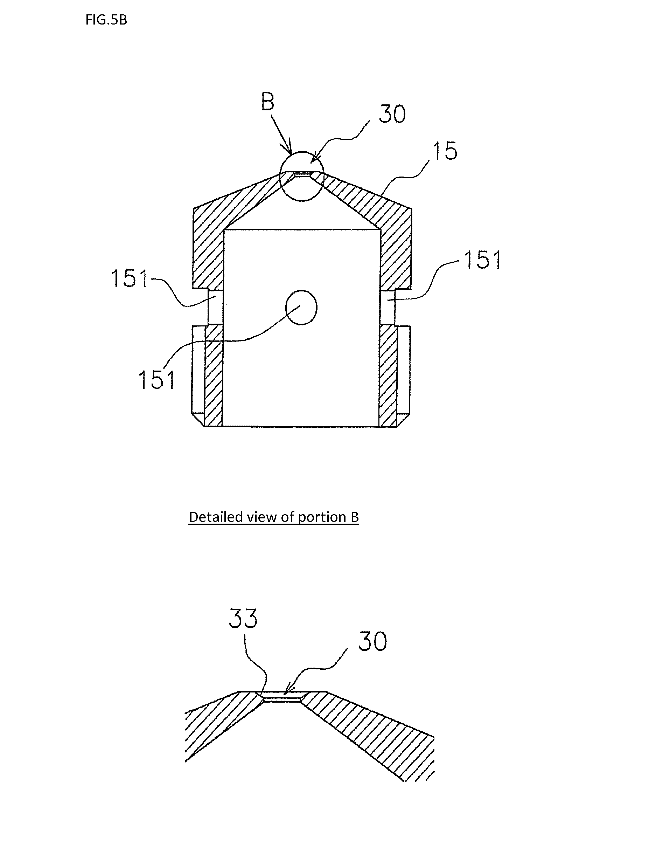

Fig. 5B is a sectional view of the cap portion 15. Four penetrating portions 151 for sending liquid to the liquid passage 110 through the liquid accommodating portion 58 are formed in the cap portion 15. Passages 114 which are in communication with the liquid passage 110 are formed in the gas-liquid orifice portion 11 at positions corresponding to the penetrating portions 151, the passages 114 are in communications with holes 115 (two holes are formed), and liquid flows from the holes 115 into the liquid passage 110.

The cover body 50 has a function for guiding mist sprayed from the spray outlet 30 along a spray axial direction of the spray outlet 30, and for micronizing the mist. The cover body 50 includes a base portion 51 connected to a lower portion of the nozzle body 10 and having the liquid accommodating portion 58, a first cover portion 52 connected to the base portion 51, a second cover portion 53 connected to the first cover portion 52, a suction cylinder 54 connected to the second cover portion 53 and having suction portions 541, and a third cover portion 55 connected to the suction cylinder 54 and formed with an outlet 56. The first cover portion 52, the suction cylinder 54 and the third cover portion 55 (which correspond to mist passages) upwardly guide mist sprayed from the nozzle body 10. A shape of the cover body 50 is not limited to that shown in Fig. 4A, a tip end thereof may not be bent into an L-shape, the tip end may incline with respect to a spray direction at an obtuse angle or an acute angle, or the tip end may extend straightly.

Fig. 4B is a schematic diagram of an outward appearance of the liquid atomization device 1 as viewed from above. A plurality of suction portions 541 are formed on the suction cylinder 54. By the suction portions 541, air can flow between inside and outside of the cover body. The outlet 56 inclines with respect to the spray axial direction of the spray outlet 30 at 90°, the outlet 56 guides mist to outside, and discharges mist. The liquid accommodating portion 58 formed in the base portion 51 is dented, and the liquid accommodating portion 58 is formed between the base portion 51, an inner wall surface of the first cover portion 52 and an outer wall surface of the nozzle body 10. The liquid accommodating portion 58 is in communication with the liquid passage 110. A gas passage 511 through which gas flows flow is formed in the base portion 51. The nozzle body 10 is incorporated in the base portion 51 through a gasket 16 on a bottom of the nozzle body 10. A connecting method between the cover portions and the suction cylinders is not especially limited, they may detachably attached to each other, or they may be coupled to each other through screws or through fitting. When these members are connected to each other, a seal member such as a gasket may be interposed therebetween.

### EMBODIMENT 2

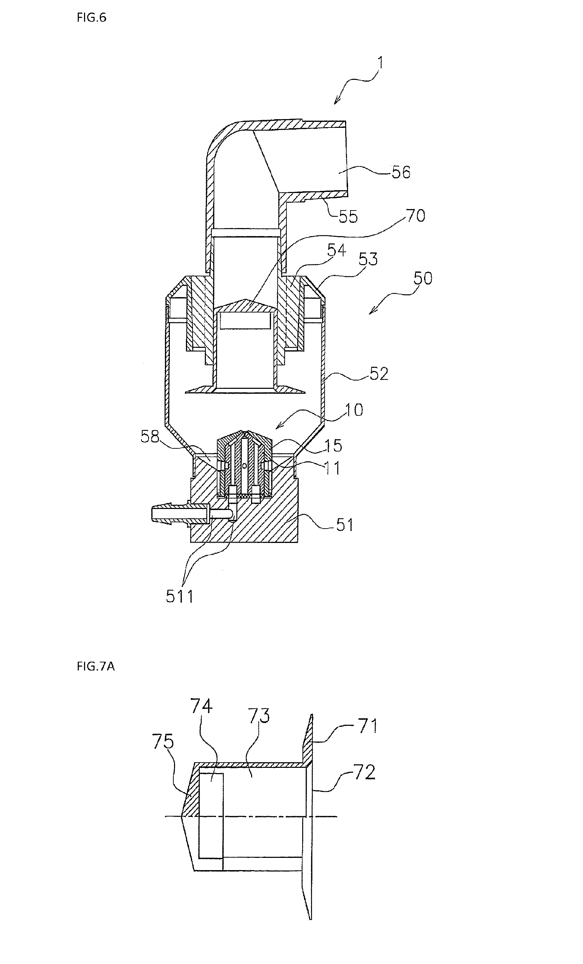

According to embodiment 2 shown in Fig. 6, a baffle portion 70 is provided in the liquid atomization device 1 of embodiment 1. The baffle portion 70 is placed in a cover body 50 from an interior of a first cover portion 52 to an interior of a suction cylinder 54 along a spray axial direction of a spray outlet 30. Sprayed mist is further micronized by the baffle portion 70.

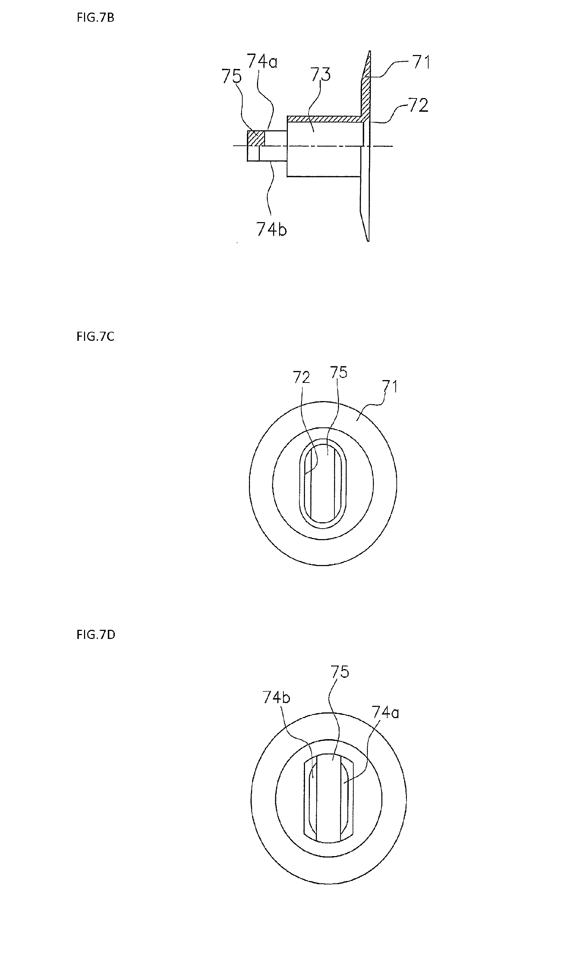

Figs. 7A to 7D are a front view, a side view, a bottom view and a plan view of the baffle portion 70. The baffle portion 70 includes a flange portion 71 formed on a bottom of the baffle portion 70, a long circular guide port 72, a hollow interior space 73, an opening outlet 74 in which two openings 74a and 74b are formed, and a ceiling surface 75. Although longitudinal directions of the openings 74a and 74b and the ceiling surface 75 are parallel to a longitudinal direction of the guide port 72 in Figs. 7A to 7D, these directions are not especially limited to the above-described relation. Shapes, positions and the number of the openings 74a and 74b of the opening outlet 74 are not limited to those illustrated in the drawings. A shape and a position of the ceiling surface 75 are not limited to those illustrated in the drawings.

### <Examples of experiments of embodiments 1 and 2>

Spray characteristics were evaluated using the liquid atomization devices having the configurations shown in embodiments 1 and 2. A diameter of a cross section of the liquid orifice 111 was φ0.28, a diameter of a cross section of the depression 111 a was φ0.5 mm, a cross section of the groove 132 had a V-shape, a width of the liquid orifice 111 was 0.18 mm, and a cut depth of the liquid orifice 111 was 0.3 mm. A cross section of gas flow is smaller than that of liquid. Air was used as gas, and water was used as liquid. A spray angle sprayed from the spray outlet of the nozzle body was set to 30°. In embodiments 1 and 2, the baffle portion was not used, and an air amount Qa (NL/min) of gas spray, an effective fog amount Qf (spray amount of mist from cover outlet), and an average particle diameter (SMD) of mist sprayed form the outlet when air pressure Pa of gas spray was changed to 0.05, 0.07 (MPa) were evaluated. Results of evaluations are shown in Table 1. The average particle diameter (SMD) was measured by a laser diffraction measuring device. A measuring position was separated from the outlet by 20 mm.

**[Table 1]**

| | Air pressure Pa (MPa) | Water pressure Pw (MPa) | Air amount Qa (NL/min) | Effective fog amount Qf (ml/min) | Average particle diameter SMD (µm) |
|---|---|---|---|---|---|
| Example 1 | 0.050 | - | 0.135 | 0.11 | 12.44 |
| Example 2 | 0.070 | - | 0.175 | 0.19 | 8.20 |

In examples 3 and 4, the baffle portion 70 was used, and an air amount Qa (NL/min)of gas spray, an effective fog amount Qf (spray amount of mist from cover outlet) and an average particle diameter (SMD) of mist sprayed form the outlet when air pressure Pa of gas spray was changed to 0.045, 0.07 (MPa) were evaluated. Results of evaluations are shown in Table 2.

**[Table 2]**

| | Air pressure Pa (MPa) | Water pressure Pw (MPa) | Air amount Qa (NL/min) | Effective fog amount Qf (ml/min) | Average particle diameter SMD (µm) |
|---|---|---|---|---|---|
| Example 3 | 0.045 | - | 0.366 | 0.13 | 6.27 |
| Example 4 | 0.070 | - | 0.484 | 0.24 | 5.23 |

In Examples 1 and 2, primary fog having an average particle diameter (SMD) of 10 to 20 µm was generated from the nozzle body by low speed spray, the fog past through the cover body, mist was micronized, and secondary fog having an average particle diameter (SMD) of 5 to 13 µm could easily be obtained. Since the primary fog is sprayed at low speed, cases where partial mist adhered to an inner wall surface of the cover body and becomes water drops are reduced. As the results of the Examples 1 and 2, it could be confirmed that liquid could be sucked with low gas energy (low gas pressure) and could be atomized. The higher the gas pressure (gas flow rate) became, the higher the suction force of liquid became, and an atomization amount (fog amount) was also increased, and the micronizing performance was enhanced.

In Examples 3 and 4, the effective fog amount Qf became greater than those of Examples 1 and 2 due to an effect of micronization of the baffle portion, and the average particle diameter (SMD) also became smaller.

### EMBODIMENT 3

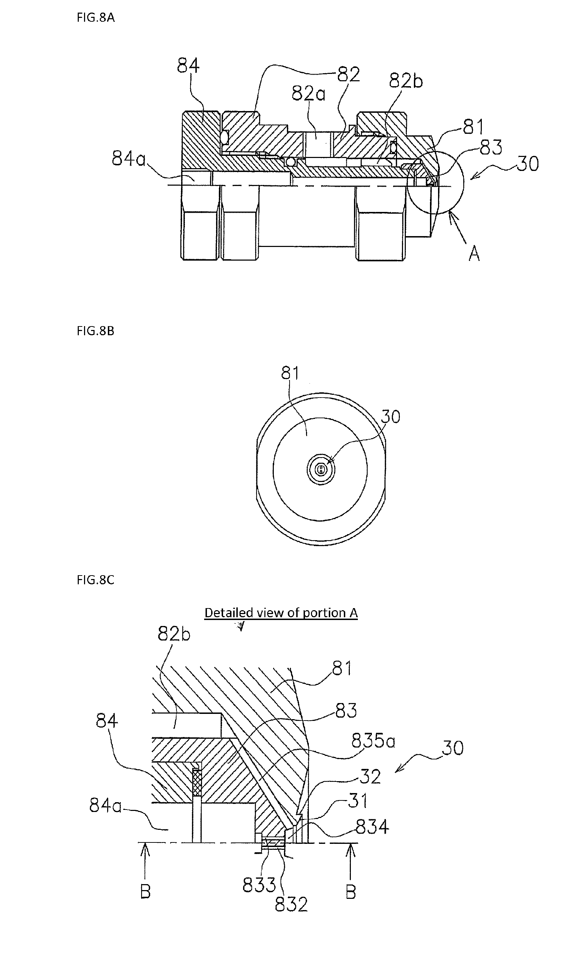

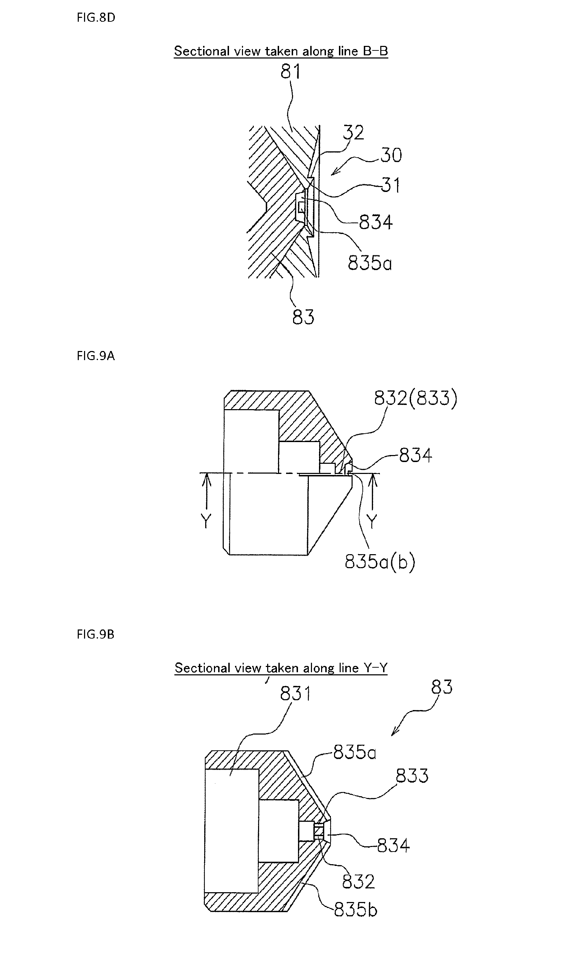

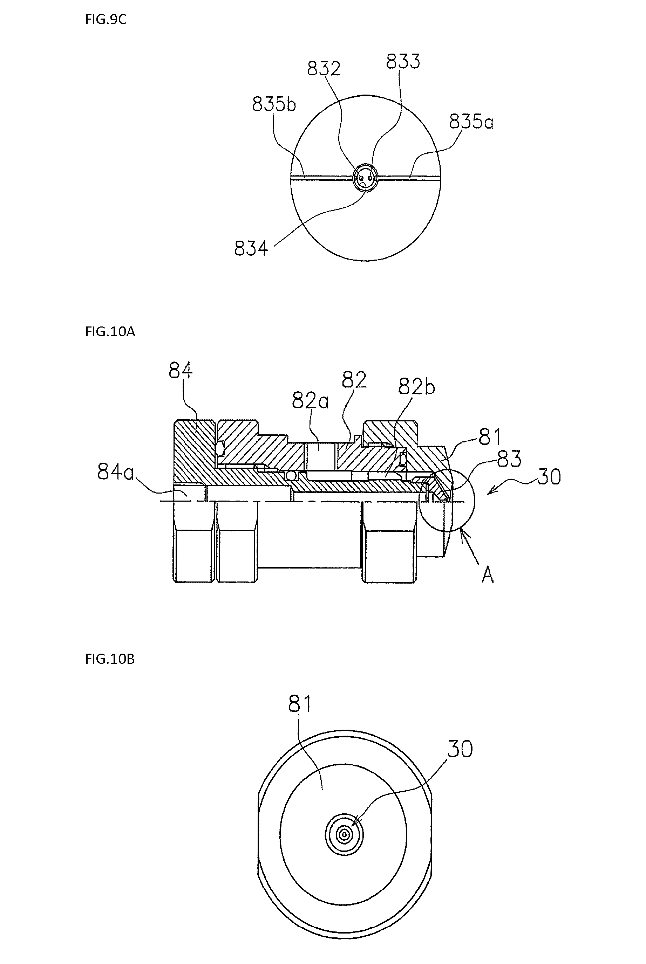

A liquid atomization device of embodiment 3 is configured as a nozzle device. Fig. 8A is a partial sectional view of the entire nozzle device 80. Fig. 8B is a front view of a spray outlet 30. A cap portion 81 is coupled to a cylindrical portion 82 by means of a screw with a gasket interposed therebetween. The cylindrical portion 82 is connected to an exterior air pump and a supply port 82a for supplying gas is formed. Two gas orifices 835a and 835b (rectangular recessed groove-shaped cross section) and two liquid orifices 832 and 833 (circular cross section) are formed on the gas-liquid orifice portion 83. The gas-liquid orifice portion 83 is fitted into a nozzle press portion 84 with a gasket interposed therebetween. The cap portion 81 is coupled to the cylindrical portion 82 through a screw. According to this, the gas-liquid orifice portion 83 is pressed into and fixed to the nozzle press portion 84 by the cap portion 81. A gas passage 82b is formed between the cylindrical portion 82 and the nozzle press portion 84, and the gas passage 82b is in communication with the two gas orifices 835a and 835b. A liquid passage 84a is formed in an axial direction of the nozzle press portion 84, and the liquid passage 84a is in communication with the two liquid orifices 832 and 833. Depressions (recesses) 834 are formed in outlets of the two liquid orifices 832 and 833. If there are the depressions 834, there is a tendency that a siphon force is stronger. The two liquid orifices 832 and 833 have such a structure that a recessed groove of an outer surface of the gas-liquid orifice portion is covered with an inner wall surface of the cap portion 81. A collision angle (α) of gas flows formed by the two gas orifices 835a and 835b is 110°. Figs. 9A to 9C show the gas-liquid orifice portion 83.

Fig. 8C is an enlarged view of a portion A in Fig. 8A. The spray outlet 30 is composed of a penetrating portion of the cap portion 81, the spray outlet 30 includes an inclined portion 31 which inclines along a spray direction such that a cross section of the inclined portion 31 spreads toward its end. The inclined portion 31 is placed such that it projects outward, and a step 32 is formed. The inclined portion 31 restrains sprayed mist from adhering to a tip end of the cap portion 81. Fig. 8D is a sectional view taken along line B-B in Fig. 8C. The gas orifice 835a (835b) is brought into communication with the depression 834, and gas is discharged to outside which is an open space. At this time, pressure in the depression 834 is brought into negative pressure, liquid is sucked from the liquid orifices 832 and 833, and liquid is atomized by gas flow. Since liquid is sucked from the two liquid orifices 832 and 833, a suction amount becomes large. Mist can be produced by low speed spray flow with a spray pattern having the spray angle of 20° to 30° and having a circular cross section. In this embodiment, a gas-liquid mixture area is composed of the depressions 834 and an interior space (space surrounded by inclined portion 31) having a cross section which spreads toward its end and toward an outlet of the spray outlet 30. In this gas-liquid mixture area, gas and liquid are internally mixed with each other and atomization is realized.

The fixing method of the various members is not limited to fixation by means of screws, and other connecting means can be used. Seal members (e.g., O-rings) (not shown) may appropriately be inserted into gaps between the members.

In embodiment 3, the cap portion 81 and the gas-liquid orifice portion 83 form the first and second gas orifices 835a and 835b, but the first and second gas orifices may be formed of a single member. A cross-sectional shape of each of the first and second orifices is not limited to the rectangular shape, and the cross sectional shape may be other polygonal shape or a circular shape. The collision angle α between the gas flows is not limited to 110°, and this angle may be set in a range from 90° to 180°. An inner wall surface of the cap portion 81 may be formed into a recessed groove shape, and this inner wall surface may be covered with an outer wall surface of the gas-liquid orifice portion 83.

### <Example of experiment of embodiment 3>

Spray characteristics were evaluated using the liquid atomization device (nozzle device) shown in embodiment 3 (Example 5). A diameter of a cross section of each of the two liquid orifices 832 and 833 was φ0.15, a diameter of a cross section of the depression 834 was φ0.81 mm, a cross section of each of the gas orifices 835a and 835b was rectangular, a width thereof was 0.2 mm, and a slit depth thereof was 0.2 mm. Air was used as gas, and water was used as liquid. In Example 5, an air amount Qa (NL/min)of gas spray, a spray amount Qw (spray amount of mist from spray outlet), and an average particle diameter (SMD) of mist sprayed form the spray outlet when air pressure Pa of gas spray was set to 0.05 (MPa) were evaluated. Results of evaluations are shown in Table 3. The average particle diameter (SMD) was measured by a laser diffraction measuring device. A measuring position was separated from the spray outlet by 20 mm.

**[Table 3]**

| | Air pressure Pa (MPa) | Water pressure Pw (MPa) | Air amount Qa (NL/min) | Spray amount Qw (ml/min) | Average particle diameter SMD (µm) |
|---|---|---|---|---|---|
| Example 5 | 0.05 | - | 0.790 | 2.91 | 19.47 |

Mist produced in Example 5 was low speed spray flow, a spray angle was 25° and a cross section of a spray pattern was circular. Although the average particle diameter (SMD) was relatively high, since a suction amount became large, the spray amount Qw increased.

### EMBODIMENT 4

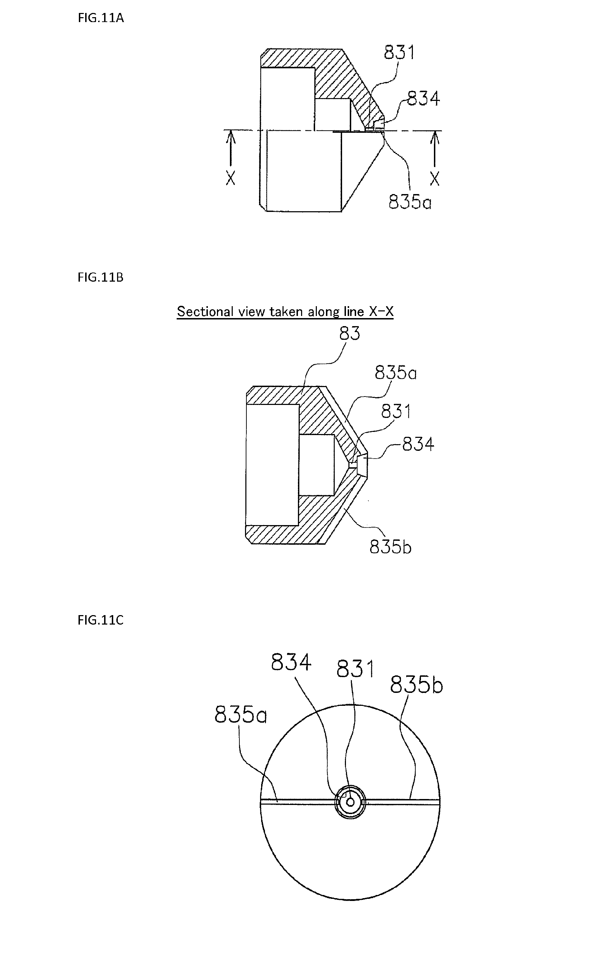

A liquid atomization device of embodiment 4 is configured as a nozzle device. Fig. 10A is a partial sectional view of the entire nozzle device 80. Fig. 10B is a front view of a spray outlet 30. A cap portion 81 is coupled to a cylindrical portion 82 by means of a screw with a gasket interposed therebetween. The cylindrical portion 82 is connected to an exterior air pump and a supply port 82a for supplying gas is formed. Two gas orifices 835a and 835b (recessed groove-shape) and one liquid orifice 831 (circular cross section) are formed on the gas-liquid orifice portion 83. The gas-liquid orifice portion 83 is fitted into a nozzle press portion 84 with a gasket interposed therebetween. The cap portion 81 is coupled to the cylindrical portion 82 through a screw. According to this, the gas-liquid orifice portion 83 is pressed into and fixed to the nozzle press portion 84 by the cap portion 81. A gas passage 82b is formed between the cylindrical portion 82 and the nozzle press portion 84, and the gas passage 82b is in communication with the two gas orifices 835a and 835b. A liquid passage 84a is formed in an axial direction of the nozzle press portion 84, and the liquid passage 84a is in communication with the one liquid orifice 831. A depression (recess) 834 is formed in an outlet of the one liquid orifice 831. If there is the depression 834, there is a tendency that a siphon force is stronger. The one liquid orifice 831 has such a structure that a recessed groove of an outer surface of the gas-liquid orifice portion is covered with an inner wall surface of the cap portion 81. A collision angle (α) of gas flows formed by the two gas orifices 835a and 835b is 110°. Figs. 11A to 11C show the gas-liquid orifice portion 83.

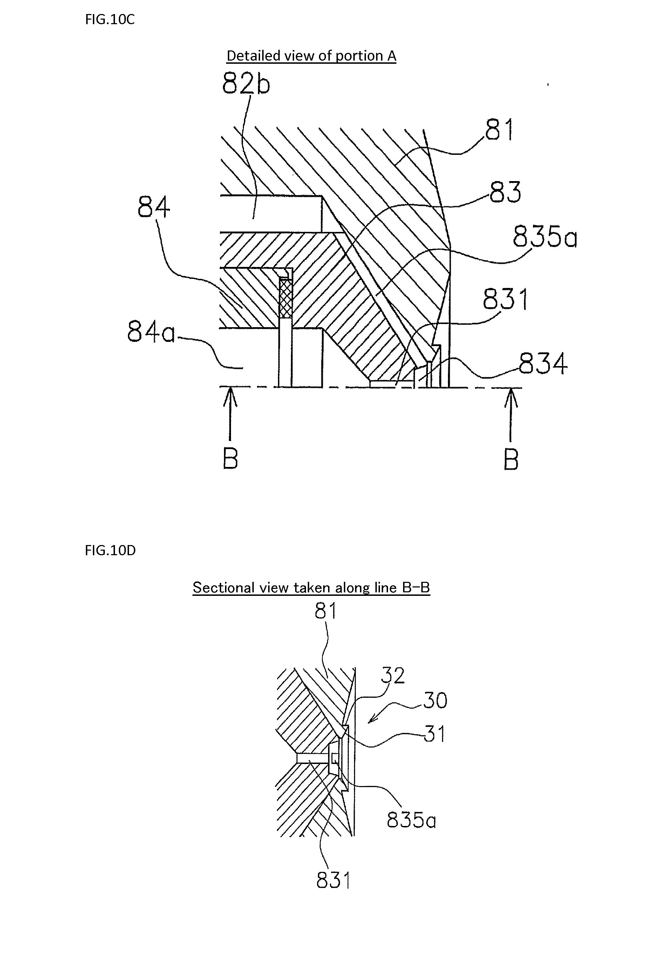

Fig. 10C is an enlarged view of a portion A in Fig. 10A. The spray outlet 30 is composed of a penetrating portion of the cap portion 81, the spray outlet 30 includes an inclined portion 31 which inclines along a spray direction in a fan-like shape such that a cross section of the inclined portion 31 spreads toward its end. The inclined portion 31 is placed such that it projects outward, and a step 32 is formed. The inclined portion 31 restrains sprayed mist from adhering to a tip end of the cap portion 81. Fig. 10D is a sectional view taken along line B-B in Fig. 10C. The gas orifice 835a (835b) is brought into communication with the depression 834, and gas flow is discharged to outside which is an open space. At this time, pressure in the depression 834 is brought into negative pressure, liquid is sucked from the liquid orifice 831, and liquid is atomized by gas flow. If gas flow is made to flow with low gas energy, liquid is sucked by a siphon effect and mist can be produced by low speed spray flow with a spray pattern having the spray angle of 70° to 90° and having an elliptic (or long circular) cross section. By changing a slip depth of the gas orifice having a rectangular cross section, it is possible to adjust the spray pattern having the elliptic cross section. In this embodiment, a gas-liquid mixture area is composed of the depressions 834 and an interior space (space surrounded by inclined portion 31) having a cross section which spreads toward its end and toward an outlet of the spray outlet 30. In this gas-liquid mixture area, gas and liquid are internally mixed with each other and atomization is realized.

The fixing method of the various members is not limited to fixation by means of screws, and other connecting means can be used. Seal members (e.g., O-rings) (not shown) may appropriately be inserted into gaps between the members.

In embodiment 4, the cap portion 81 and the gas-liquid orifice portion 83 form the first and second gas orifices 835a and 835b, but the first and second gas orifices may be formed of a single member. A cross-sectional shape of each of the first and second orifices is not limited to the rectangular shape, and the cross-sectional shape may be other polygonal shape or a circular shape. The collision angle a between the gas flows is not limited to 110°, and this angle may be set in a range from 90° to 180°. An inner wall surface of the cap portion 81 may be formed into a recessed groove shape, and this inner wall surface may be covered with an outer wall surface of the gas-liquid orifice portion 83.

### <Example of experiment of embodiment 4>

Spray characteristics were evaluated using the liquid atomization device (nozzle device) shown in embodiment 4 (Example 6). A diameter of a cross section of the liquid orifice 831 was φ0.2, a diameter of a cross section of the depression 834 was φ0.73 mm, a cross section of each of the gas orifices 835a and 835b was rectangular, a width thereof was 0.15 mm, and a slit depth thereof was 0.3 mm. Air was used as gas, and water was used as liquid. In Example 6, an air amount Qa (NL/min) of gas spray, a spray amount Qw (spray amount of mist from spray outlet), a spray angle γ, and an average particle diameter (SMD) of mist sprayed form the spray outlet when air pressure Pa of gas spray was set to 0.05 (MPa) were evaluated. Results of evaluations are shown in Table 4. The average particle diameter (SMD) was measured by a laser diffraction measuring device. A measuring position was separated from the spray outlet by 20 mm.

**[Table 4]**

| | Air pressure Pa (MPa) | Water pressure Pw (MPa) | Air amount Qa(NL/min) | Spray amount Qw (ml/min) | Average particle diameter SMD (µm) |
|---|---|---|---|---|---|
| Example 6 | 0.05 | - | 0.570 | 1.23 | 18.77 |

Mist produced in Example 6 was low speed spray flow, a spray angle γ was 80° and a cross section of a spray pattern was elliptic.

### <Example 7>

In a configuration of the liquid atomization device (nozzle device) of embodiment 4, a diameter of a cross section of the liquid orifice 831 was φ0.4, a diameter of a cross section of the depression 834 on the liquid orifice side was φ0.73 mm, a cross section of each of the gas orifices 835a and 835b was V-shape, a width thereof was 0.3 mm, and a slit depth thereof was 0.2 mm. A case using only this nozzle device, a case where the cover body 50 shown in Fig. 4A was attached to the nozzle device, and a case where the cover body 50 and the baffle portion 70 shown in Fig. 6 were attached to the nozzle device were evaluated. Air was used as gas, and water was used as liquid. In Example 7, an air amount Qa (NL/min) of gas spray, spray amounts Qw and Qf (spray amount from nozzle spray outlet and cover outlet and effective fog amount), and an average particle diameter (SMD) of sprayed mist when air pressure Pa of gas spray was changed from 0.05 (MPa) to 0.5 (MPa) were evaluated. Results of evaluations are shown in Table 5. The average particle diameter (SMD) was measured by a laser diffraction measuring device. A measuring position was separated from the respective spray outlets by 50 mm.

**[Table 5]**

| Air pressure Pa (MPa) | Air amount Qa (NL/min) | Spray amount (ml/min) | | | Average particle diameter SMD (µm) | | |
|---|---|---|---|---|---|---|---|
| | | Spray (Qw) from nozzle device | Spray (Qf) from cover portion 50 (no baffle) | Spray (Qf) from cover portion 50 (with baffle) | Spray from nozzle device | Spray from cover portion 50 (no baffle) | Spray from cover portion 50 (with baffle) |
| 0.05 | 0.78 | 1.23 | 0.200 | 0.120 | 26.50 | 7.25 | 6.08 |
| 0.10 | 1.18 | 2.39 | 0.440 | 0.244 | 15.75 | 6.19 | 4.42 |
| 0.20 | 1.82 | 4.73 | 0.772 | 0.440 | 9.75 | 3.39 | 2.03 |
| 0.30 | 2.50 | 5.40 | 1.190 | 0.614 | 7.28 | 2.78 | 1.58 |
| 0.40 | 3.16 | 5.09 | 1.410 | 0.621 | 6.25 | 2.36 | 1.38 |
| 0.50 | 3.78 | 5.02 | 1.692 | 0.621 | 5.56 | 2.02 | 1.29 |

Mist produced in Example 7 was low speed spray flow, a spray angle γ was 80° and a cross section of a spray pattern was elliptic.

### DESCRIPTION OF REFERENCE SIGNS

- 1: first gas spray portion (gas orifice)
- 2: second gas spray portion (gas orifice)
- 6: liquid passage (liquid orifice)
- 10: nozzle body
- 30: spray outlet
- 50: cover body
- 70: baffle portion
- 120: gas-liquid mixture area

## Claims

1. A liquid atomization device, comprising:
a nozzle body including:
a first gas spray portion and a second gas spray portion for spraying two gas flows;
a liquid passage having a passage through which liquid flows by formation of the two gas flows sprayed by the first gas spray portion and the second gas spray portion;
a gas-liquid mixture area where the gas flow sprayed from the first gas spray portion and the gas flow sprayed from the second gas spray portion are made to collide against liquid which flows from the liquid passage to atomize the liquid; and
a spray outlet for spraying mist atomized in the gas-liquid mixture area to outside.

2. The liquid atomization device according to claim 1, wherein an intersection angle between a spray direction axis of the first gas spray portion and a spray direction axis of the second gas spray portion is in a range from 90° to 180°.

3. The liquid atomization device according to claim 1 or 2, further comprising at least one more passage possessed by the liquid passage.

4. The liquid atomization device according to any one of claims 1 to 3, further comprising a cover body for micronizing mist sprayed from the spray outlet while guiding the mist along a spray axial direction of the spray outlet,
the cover body including:
a suction portion through which air can flow between inside and outside of the cover body;
a mist passage for guiding the mist upward;
an outlet for guiding, to outside, mist which passes through the mist passage; and
a liquid accommodating portion for accommodating the liquid therein,
wherein the liquid accommodating portion is in communication with the liquid passage, and the liquid flows into the liquid passage.

5. The liquid atomization device according to claim 4, further comprising a baffle portion provided in the cover body for guiding the mist along a spray axial direction of the spray outlet.

6. The liquid atomization device according to claim 5, wherein the baffle portion includes a long-circular, elliptic or rectangular guide port, a hollow internal space, and an opening outlet in which at least two openings are formed.

7. The liquid atomization device according to any one of claims 4 to 5, wherein the cover body includes:
a base portion connected to the nozzle body and having the liquid accommodating portion;
a first cover portion connected to the base portion;
a second cover portion connected to the first cover portion;
a suction cylinder connected to the second cover portion and having the suction portion; and
a third cover portion connected to the suction cylinder, and formed with the outlet.

8. The liquid atomization device according to claim 4, wherein the outlet inclines with respect to a spray axial direction of the spray outlet at a predetermined angle.

9. The liquid atomization device according to claim 7 or 8, wherein a gas passage through which the gas flows flow is formed in the base portion.
